(19) **Europäisches Patentamt**

**European Patent Office**

**Office européen des brevets**

(11) Veröffentlichungsnummer: **0 275 349 B1**

(12) **EUROPÄISCHE PATENTSCHRIFT**

(45) Veröffentlichungstag der Patentschrift: **11.03.92**

(21) Anmeldenummer: **87108258.2**

(22) Anmeldetag: **06.06.87**

(51) Int. Cl.⁵: **C21C 7/00**, C21C 5/52

(54) **Verfahren zum sekundär-metallurgischen Behandeln von Metallschmelzen, insbesondere Stahlschmelzen.**

(30) Priorität: **09.01.87 AT 29/87**

(43) Veröffentlichungstag der Anmeldung:
**27.07.88 Patentblatt 88/30**

(45) Bekanntmachung des Hinweises auf die
Patenterteilung:
**11.03.92 Patentblatt 92/11**

(84) Benannte Vertragsstaaten:
**AT BE CH DE ES FR GB IT LI LU SE**

(56) Entgegenhaltungen:
**DE-A- 1 508 112        DE-A- 2 152 689
DE-A- 2 608 279        DE-A- 3 232 551
FR-A- 2 097 183        GB-A- 781 108
US-A- 4 560 405**

**PATENT ABSTRACTS OF JAPAN, Band 10,
Nr. 194 (C-358)[2250], 8. Juli 1986; & JP-A-61
37 910 (NIPPON KOKAN K.K.) 22-02-1986**

**RESEARCH AND DEVELOPMENT IN JAPAN,
1982, Seiten 22-28, Okochi Memorial Foundation; N. URUSHIYAMA et al.: "Development of
a reduction refining process for molten steel in a ladle furnace - the LF process"**

(73) Patentinhaber: **Inteco Internationale Technische Beratung Gesellschaft mbH
Wiener Strasse 25
8600 Bruck a.d. Mur(AT)**

(72) Erfinder: **Holzgruber Wolfgang Dipl.-Ing. Dr.
mont.,
Westend 33
A-8600 Bruck-Mur(AT)**
Erfinder: **Haissig Manfred Dipl.Ing.
Foxhill,Irvine
CA 92714 California(US)**

(74) Vertreter: **Hiebsch, Gerhard F., Dipl.-Ing.
Erzbergerstrasse 5A Postfach 464
W-7700 Singen 1(DE)**

EP 0 275 349 B1

PATENT ABSTRACTS OF JAPAN, Band 8, Nr. 266 (C-255)[1703], 6. Dezember 1984; & JP-A-59 140 324 (HITACHI SEISAKUSHO K.K.) 11-08-1984

IRON AND STEEL ENGINEER, Band 62, Nr. 11, November 1985, Seiten 29-33, Pittsburgh, Pennsylvania, US; R.M. SMAILER et al.: "Development of the NK-AP ladle refining process"

STAHL UND EISEN, Nr. 15, 23. Juli 1984, Seiten 727-735, Düsseldorf, DE; H.-J. FLEISCHER: "Stand und Metallurgie des ESU-Verfahrens"

**Beschreibung**

Die Erfindung betrifft ein Verfahren zum sekundärmetallurgischen Behandeln von Metallschmelzen, insbesondere Stahlschmelzen, in einem metallurgischen Gefäß wie Gieß- oder Transportpfanne, Zwischengefäß, Verteiler oder Konverter, durch Einleiten von Gleich- oder ein- oder mehrphasigem Wechselstrom mittels eintauchender strombeaufschlagter Elektroden.

Die sekundärmetallurgische Behandlung von Metallschmelzen und insbesondere Stahlschmelzen außerhalb des eigentlichen Erzeugungsaggregates hat eine weitreichende Bedeutung erlangt. So sind Verfahren und Anlagen bekannt, die es ermöglichen, die Stahlschmelze in der Pfanne zu entgasen, legieren, entschwefeln, entweder mit Gas zu spülen oder induktiv umzurühren und mittels Lichtbogen, Plasmabogen oder induktiv zu beheizen.

Wenn mittels Lichtbogen beheizt wird, so wird im allgemeinen einer Anordnung mit drei Elektroden, wie dies etwa die DE-A-3 232 551 in Verbindung mit einer Metallelektrolyse beschreibt, der Vorzug gegeben, obwohl auch Verfahrensweisen mit einer oder zwei Elektroden bekannt sind.

Die Lichtbogenbeheizung kann unter Luftabschluß unter meist reduziertem Druck erfolgen. In diesem Fall wird oft keine oder nur wenig Schlacke verwendet. Erfolgt die Lichtbogenbeheizung in offenen Anlagen bei Atmosphärendruck, so wird das Metallbad meist durch eine Schlacke abgedeckt, deren Zusammensetzung im allgemeinen so gewählt wird, daß der Angriff auf das Pfannenmauerwerk gering bleibt.

Bei allen diesen Verfahren besteht die Möglichkeit, die Temperaturverluste in der Pfanne auszugleichen, beziehungsweise die Temperatur der Metallschmelze bei gleichzeitigem Umrühren des Metalles durch Gasspülung oder induktivem Rühren zu erhöhen. Obwohl diese Verfahren durchaus in der Lage sind, die geforderte Aufheizung der Schmelze zu erreichen, so ist dieser Effekt doch auch mit Nachteilen verbunden.

Diese Nachteile gehen vor allem darauf zurück, daß eine Lichtbogen- oder Plasmabeheizung eine hohe Strahlungsbelastung der Pfannenwand und des Pfannendeckels zur Folge hat, die sich nachteilig auf den Verbrauch an feuerfestem Material auswirkt. Dieser Nachteil wirkt sich besonders stark bei kleinen Schmelzengrößen aus, da dann der Abstand der Elektroden und damit der Strahlungsquelle vom Pfannenrand nur gering ist.

Ein weiterer Nachteil der Lichtbogenbeheizung, vor allem bei offenen Anlagen ist, daß im Lichtbogen der Übergang von Wasserstoff und Stickstoff in die Schmelze gefördert wird und so zu unerwünschten Verunreinigungen derselben führen kann.

Diesen Mangel versucht man durch den Bau geschlossener Anlagen zu vermeiden, in welchen der Lichtbogen bei abgesenktem Druck unter einer Schutzgasatmosphäre aus Argon aufrechterhalten wird. Diese Anlagen bedingen jedoch höhere Investitionskosten sowie weiters, daß der Lichtbogen bei abgesenktem Druck nicht so konzentriert brennt und damit wieder der Aufwärmeffekt nachteilig beeinflußt wird. Weiters haben geschlossene Anlagen den Nachteil, daß Legierungszusätze nicht so einfach zu machen sind, und auch das Probeziehen und Temperaturmessen wird erschwert.

Ein zusätzlicher Nachteil der Lichtbogenbeheizung bei offenen Anlagen ist, daß im Brennfleck des Lichtbogens Schlackenkomponenten verdampfen und so eine starke Rauchentwicklung bewirken. Beim Betrieb mit einem Lichtbogen hoher Leistung und einer nur dünnen Schlackenschicht kann der Lichtbogen die Schlacke durchschlagen, so daß das darunterliegende Metall im Bereich des Lichtbogens direkt der Atmosphäre ausgesetzt ist. Dadurch wird der Übergang von Stickstoff, Wasserstoff bzw. Sauerstoff in das Metallbad besonders begünstigt.

Bei einem anderen ebenfalls zum Stand der Technik gehörenden Verfahren wird eine Metallschmelze in einem kippbaren Konvertergefäß durchspült, wobei eine innige Durchmischung von Schlacke und Metall einen raschen Reaktionsablauf zur Folge hat.

Die erforderliche Prozeßwärme bzw. Temperatursteigerung wird bei diesem Verfahren durch die Oxidation von Silizium, Aluminium bzw. Chrom erzielt. Dies führt jedoch einerseits zu relativ hohen Kosten, da die daraus gewonnene thermische Energie teuer ist, sowie andererseits zum Auftreten großer Mengen zum Teil agressiver Schlacken, was einen hohen Verbrauch an feuerfestem Material zur Folge hat. Aus diesem Grund wurde auch schon vorgeschlagen, die Schmelze im Konverter mittels einer Drehstromlichtbogenbeheizung aufzuheizen. Abgesehen von den Platzproblemen bei der Anordnung von drei Elektroden im Konvertergefäß gilt hier auch das oben für den Betrieb mit Lichtbogen in der Pfanne Gesagte.

Die oben beschriebenen Nachteile sollen durch die Erfindung weitgehend vermieden werden, wobei außerdem der technische Aufwand durch eine einfachere Bauweise verringert werden kann sowie erwünschte Zusatzeffekte gezielt bewirkt werden können; es soll das Aufheizen von Schlacke und Metallbad ohne die mit einer Lichtbogenheizung einhergehenden Mängel erzielt werden.

Dem erfindungsgemäßen Verfahren liegt der Gedanke zugrunde, die Metallschmelze durch eine ausreichend hohe Schicht einer als Ohm'scher Widerstand wirkenden Schlacke mit ausreichender elektri-

EP 0 275 349 B1

scher Leitfähigkeit abzudecken, in welche eine oder mehrere Elektroden eintauchen, so daß der Strom ohne Bildung eines Lichtbogens direkt von der Elektrodenspitze in die Schlacke übergeht, diese beim Durchgang des Stroms erhitzt wird und Wärme an die darunter liegende Schmelze abgibt. Lichtbogenfreie Verfahren sind zum Einschmelzen beispielweise von Stahlschrott an sich bekannt (DE-A-2 608 278).

Zur Lösung der geschilderten Aufgabe führt die Lehre nach Patentanspruch 1.

Dabei ist für die Erzielung des erfindungsgemäß erwünschten Effekts von Bedeutung, daß die Elektrode nicht in direkten leitenden Kontakt mit der unter der Schlackenschicht befindlichen Metallschmelze gelangt, sondern diese die Erwärmung aus der infolge des Stromdurchgangs ohne Lichtbogenbildung durch die Schlackenschicht erhält, wobei Metallschmelze und Schlackenschicht während der Beheizung kontinuierlich durch Gasspülen oder induktives Rühren bewegt werden.

Vorteilhafte Merkmale des erfindungsgemäßen Verfahrens sind in den Ansprüchen 2 - 15 erwähnt.

Die verwendete Schlacke besteht nach der Erfindung vorzugsweise zu mindestens 60 % aus CaO und $Al_2O_3$ in beliebigem Mischungsverhältnis und kann als sonstige Zusätze 0- 35 % $SiO_2$, 0- 35% MgO, 0- 35% $CaF_2$ enthalten, wobei der Gehalt der Schlacke an Schwermetalloxiden, wie den Oxiden des Eisens, Mangans, Chroms und anderen 2% nicht überschreitet.

Beonders gute Ergebnisse hinsichtlich der Raffination von Stahlschmelzen werden erzielt bei der Verwendung von Schlacken, deren spezifischen Widerstand 0.4 -0.8 Ohm cm beträgt und deren Zusammensetzung dem Patentanspruch 3 zu entnehmen ist.

Um ein ausreichendes Eintauchen der Elektroden bei einem sinnvollen Verhältnis von Stromstärke und Spannung sicherzustellen, soll eine Höhe der Schlacken von wenigstens 80 mm eingehalten werden. Damit die Schlackenkosten in einem wirtschaftlich tragbaren Bereich bleiben, sollte in der Regel eine Schlackenschichthöhe von 150 mm nicht überschritten werden, obwohl vom verfahrenstechnischen Gesichtspunkt aus keine Höhenbegrenzung geboten ist.

Grundsätzlich gilt die Regel, die sich aus dem Ohm'schen Gesetz ableitet, daß bei einer Zunahme der Schlackenbadhöhe bei gleichbleibender Eintauchtiefe der Elektrode für die Einbringung einer bestimmten Leistung in die Schlacke das Verhältnis von Spannung zu Stromstärke ansteigt. Im Gegensatz dazu hat eine Zunahme des in die Schlacke eintauchenden Elektrodenquerschnittes bei gleichbleibender Eintauchtiefe der Elektrode bei gleicher Leistung und gleicher Schlackenbadhöhe eine Abnahme des Verhältnisses von Spannung zu Stromstärke zur Folge.

Bei der Auslegung einer Anlage für dieses Elektroschlacke-Behandlungsverfahren läßt sich daher zunächst der Leistungsbedarf festlegen, der sich beispielsweise im Falle einer Pfannenbehandlungsanlage aus Pfannengröße, Pfannenvorwärmung, gewünschter Aufheizrate und Metallinhalt nach den allgemeinen Regeln der Technik errechnet. Durch Anwendung des Ohm'schen Gesetzes können dann für einen bestimmten Elektrodenquerschnitt und eine bestimmte Schlackenbadhöhe, wenn Schlackenzusammensetzung und damit der spezifische elektrische Widerstand bekannt sind, die benötigte Spannung und Stromstärke errechnet werden. Durch Änderung der Schlackenbadhöhe kann dann das Verhältnis von Spannung zu Stromstärke verändert werden.

Es gilt dabei der folgende Zusammenhang

$$L = \frac{U \cdot F'}{I \cdot \rho s} \quad \ldots\ldots\ldots\ldots\ldots\ (1)$$

mit

L Abstand der Elektrode vom Metallbad in cm. Für den Zweck der Erfindung meist etwa 1 cm kleiner als die Schlackenbadhöhe

U Spannung in Volt

I Stromstärke in Ampere

F' Elektrodenquerschnittsfläche in $cm^2$

$\rho s$ spezifischer Widerstand der Schlacke in Ohm.cm

da weiterhin die elektrische Leistung P in Watt

$$P = U \cdot I \quad (2)$$

kann Gleichung (1) umgewandelt werden in

4

$$I = \sqrt{\frac{P}{L} \cdot \frac{F'}{\rho_s}} \qquad \dots\dots\dots\dots\dots\dots\dots\dots\dots\dots\dots \quad (3)$$

Die folgenden beiden Beispiele sollen als nähere Erläuterung für das oben Gesagte dienen.

Beispiel 1:

Eine Pfanne für eine 10-t Stahlschmelze hat einen Innendurchmesser von ca. 1,4 m. Die gewünschte Aufheizungsgeschwindigkeit beträgt 3°C/min. Der Temperaturverlust ohne Beheizung beträgt 4°C/min.

Der Leistungsbedarf berechnet sich daraus, daß für 10 t Stahl mit einer spez. Wärme von 0.2 Kcal/kg°K eine Temperaturdifferenz von 7°C/min (4° + 3°) ausgeglichen werden muß. Daraus errechnet sich eine Heizleistung von 976 kW. Unter Berücksichtigung eines Wirkungsgrades der Wärmeübertragung von der Schlacke an das Metall von 70% ist die gesamte erforderliche Heizleistung 1393 kW.

Bei Verwendung einer Schlacke mit 50% CaO, 30% $Al_2O_3$, 15% $SiO_2$ und 5% MgO kann der spez. Widerstand bei 1600°C mit etwa 0,60 Ohm.cm abgeschätzt werden.

Bei 80 mm Schlackenbadhöhe und Verwendung einer Elektrode mit 300 mm Durchmesser errechnet sich für eine Eintauchtiefe von 10 mm aus Gleichung (3) die Stromstärke 7 mit 15.300 Ampere und die Spannung mit 91 Volt.

Bei Anwendung einer Schlackenschichthöhe von 15 cm und gleicher Eintauchtiefe ergeben sich für die Stromstärke 11.180 Ampere und für die Spannung 125 Volt.

Beispiel 2:

Eine 150 t-Pfanne hat einen Durchmesser von 3.1 m. Die Temperaturverluste der Pfanne sollen während des 3 Stunden dauerden Gießvorganges durch eine Elektroschlackenbeheizung gedeckt werden. Aus den Temperaturverlusten errechnet sich ein Leistungsbedarf von 3350 kW. Bei einem Wirkungsgrad von 70% ist der Leistungsbedarf 4800 kw.

Bei Verwendung einer Ektrode mit 400 mm Durchmesser, einer Schlacke mit einem spez. Widerstand von 0.60 Ohm.cm und 150 mm Schlackenbadhöhe errechnen sich für 10 mm Eintauch tiefe für die Stromstärke 26.800 Ampere und für die Spannung 179 Volt.

Bei einer Schlackenbadhöhe von 100 mm wären die Werte 32.800 Ampere und 146 Volt.

Für die Durchführung des erfindungsgemäßen Verfahrens können nichtverzehrbare Elektroden, wie beispielsweise handelsübliche Graphitelektroden verwendet werden.

Grundsätzlich ist aber auch die Verwendung von verzehrbaren Elektroden möglich, ähnlich wie bei den Elektroschlacke-Umschmelzverfahren, wobei die Elektrode die gleiche chemische Zusammensetzung wie die Metallschmelze im ausgemauerten Gefäß aufweisen kann. Die Elektrode kann aber auch eine andere chemische Zusammensetzung haben und damit gezielt zur Veränderung der chemischen Zusammensetzung der Metallschmelze verwendet werden.

Der Einsatz selbstverzehrbarer Elektroden eröffnet auch die Möglichkeit, den im Betrieb anfallenden stangenförmigen Rücklaufschrott-wie abgeschnittene Enden an der Stranggußanlage, im Walzwerk oder in der Schmiede, aber auch sonstiges Ausschußmaterial-wirtschaftlich wiederzuverwenden, ohne dieses Material für einen Primärschmelzprozeß aufbereiten und dort einschmelzen zu müssen. Ein derartiges direktes Umschmelzen im erfindungsgemäßen Elektroschlacke-Behandlungsprozeß ergibt ein praktisch hundertprozentiges Ausbringen des umgeschmolzenen Elektrodenmetalls bei gleichzeitiger Einsparung der Umwandlungskosten im Primärschmelzprozeß und unter Einsparung von Graphitelektroden, bei welchen bei längerem Warmhalten unter Luftzutritt Oxidationsverluste auftreten würden.

Nach dem erfindungsgemäßen Verfahren ist es auch möglich, die Schmelze im Behandlungsgefäß vollständig aus einer oder mehreren verzehrbaren Elektroden durch Abschmelzen derselben in einer vorher in das Gefäß gekippten flüssigen Schlacke oder einer im Gefäß selbst verflüssigten Schlacke zu erzeugen. Die einzelnen Elektroden können dabei je nach Zweckmäßigkeit und Möglichkeiten der Anlage gleichzeitig oder nacheinander umgeschmolzen werden.

Als metallurgisches ausgemauertes Gefäß für die Durchführung des erfindungsgemäßen Verfahrens kann grundsätzlich jedes ausgemauerte Gefäß dienen, wie beispielsweise ein Konvertergefäß, eine Gieß- oder Transportpfanne bzw. auch ein Verteiler- oder Zwischengefäß.

Als Stromversorgung für die Durchführung des erfindungsgemäßen Verfahrens können sowohl einphasiger Wechselstrom, Drehstrom, aber auch Gleichstrom direkter oder indirekter Polung Anwendung finden.

Beim Arbeiten mit einphasigem Wechselstrom oder Gleichstrom wird vorgeschlagen, daß der Strom über nur eine Elektrode in die Schlackenschicht eingeleitet und von dort über Leiterelemente in der feuerfesten Auskleidung des metallurgischen Gefäßes und dessen Wandung und an diese angeschlossene Leiter zur Stromquelle zurückgeleitet wird.

Bei Verwendung von zwei parallel zueinander angeordneten Elektroden kann die Zuleitung über die eine und die Rückleitung über die zweite Elektrode erfolgen. Eine Rückleitung über das Gefäß mag dann entfallen.

Soll das Verfahren mit Drehstrom benutzt werden, wird dieser über drei Elektroden in die Schlackenschicht eingeleitet, die auf einem Teilkreis in gleichen Abständen voneinander angeordnet sind, um eine annähernd symmetrische Stromverteilung zu gewährleisten. Auch in diesem Fall kann eine Rückleitung über das Gefäß unterbleiben.

Wird Gleichstrom für die Beheizung verwendet, so kann eine geeignete Schaltung aufgrund der durch den Gleichstrom in der Schlacke hervorgerufenen Polarisationseffekten zu erwünschten Nebeneffekten führen. Dabei ist davon auszugehen, daß die Schlacken im flüssigen Zustand aus Ionen, d.h. negativ geladenen Anionen und positiv geladenen Kationen bestehen, die an der Anode (positiver Pol) bzw. der Kathode (negativer Pol) angesammelt werden und dort nach Abgabe bzw. Aufnahme elektrischer Ladung reagieren können. So geben beispielsweise negativ geladene Anionen an der Anode Elektronen ab und werden dadurch neutralisiert und können dann mit anderen Stoffen reagieren. Sauerstoff ist beispielsweise in der Schlacke als $O^{2-}$-Ion enthalten. Wird als Anode eine Graphitelektrode verwendet, so kann der Sauerstoff nach Abgabe von 2 Elektronen mit dem Kohlenstoff der Elektrode reagieren, wobei Kohlenmonoxid gebildet wird, welches in die Atmosphäre entweicht, gemäß

$$(O^{2-}) \rightleftharpoons O + 2\,e \qquad (4)$$
$$O + C \rightleftharpoons CO \qquad (5)$$

Umgekehrt kann an der die Kathode bildenden Oberfläche des Metallbades die Reaktion in entgegengesetzter Richtung so ablaufen, daß der Sauerstoff in der Schmelze, die den negativen Pol bildet und Elektronen abgeben kann, nach Aufnahme von 2 Elektronen als $O^{2-}$-Ion in die Schlacke übergeht. Eine derartige Schaltung bei Verwendung nichtverzehrbarer Elektroden ist daher geeignet, bei ausreichend langen Behandlungszeiten den Sauerstoffgehalt der Metallschmelze auf elektrochemischem Wege abzubauen. In ähnlicher Weise ist auch eine Entschwefelung möglich, da der Schwefel in der Schlacke ebenfalls als $S^{2-}$-Anion vorliegt.

Bei Verwendung verzehrbarer Elektroden werden diese dagegen vorzugsweise als Kathode geschaltet, da dann aufgrund der höheren Stromdichte an der Elektrode die Kathodenreaktion, d.h. Sauerstoffabbau, in stärkerem Maße abläuft als die Anodenreaktion an der Badoberfläche, wo die Stromdichte wesentlich geringer ist. Durch Einbau von Kohlenstoffsteinen in der Schlackenzone kann die Anodenreaktion dorthin verlegt werden, ohne daß das Metallbad ungünstig beeinflußt würde.

Die Erfindung beinhaltet ferner die Möglichkeit, daß beim Überleiten der Metallschmelze aus einem metallurgischen Gefäß, einer Gießpfanne oder dgl. Zwischengefäß in ein Verteiler- oder weiteres Zwischengefäß die Metallschmelze in der Gießpfanne wie auch in den Verteiler- und Zwischengefäßen durch eine gemeinsame oder zwei getrennte Stromquellen beheizt wird. Eine besonders vorteilhafte Anwendung dieses Verfahrens ergibt sich beispielsweise beim Stranggießen, wenn die Elektroschlackebehandlung gleichzeitig sowohl in der Pfanne als auch im Verteilergefäß angewendet wird. Eine derartige Verfahrensweise ermöglicht die Einhaltung praktisch isothermer Verhältnisse beim Gießvorgang über nahezu beliebig lange Zeiten. Durch Verwendung der in der Erfindung angegebenen Schlacken wird außerdem noch eine Raffinationswirkung erzielt, so daß lange Haltezeiten eher von Vorteil als von Nachteil für den Reinheitsgrad der Metallschmelze sind.

Die Anwendung des erfindungsgemäßen Verfahrens ist nicht auf Atmosphärendruck beschränkt. Da die Leitung des elektrischen Stromes in der leitenden Schlacke durch den Druck der darüberliegenden Atmosphäre nicht beeinflußt wird, kann das erfindungsgemäße Verfahren sowohl bei Unterdruck (Vakuum) als auch unter Überdruck durchgeführt werden. Es wird dafür weiterhin vorgeschlagen, daß das Erzeugen und/oder Behandeln der Metallschmelze durch verzehrbare oder unverzehrbare Elektroden in einem gasdicht geschlossenen Gefäß bei einem Gasdruck kleiner als 500 mbar, vorzugsweise 50 mbar im Innenraum erfolgt, oder aber, daß diese Behandlung der Metallschmelze durch verzehrbare oder unverzehrbare Elektroden in einem gasdicht geschlossenen Gefäß bei einem Gasdruck größer als 2 bar im Innenraum erfolgt.

Die Benutzung der erfindungsgemäßen Verfahrensweisen ist nicht von einem bestimmt ausgebildeten metallurgischen Gefäß abhängig. Vielmehr kann dieses als Konvertergefäß, als Gießpfanne oder als Zwischen- oder Verteilergefäß ausgebildet sein.

Außerdem können beim Verfahren nach der Erfindung auch mittels eines gasdichten Deckels verschließbare metallurgische Gefäße zum Einsatz, kommen, deren Deckel je eine gasdichte Durchführung für jede der vorhandenen Elektroden aufweist. Dieses Gefäß kann je nach dem durchzuführenden Verfahren über einen Stutzen und entsprechende Leitungen an einen Vakuumpumpensatz oder eine Druckgaszuleitung angeschlossen sein. Bei Durchführung des Verfahrens unter Überdruck ist das metallurgische Gefäß mit dem gasdichten Deckel und die Elektrodennachsetzvorrichtung für den vorgesehenen Innendruck ausgelegt, insbesondere derart, daß der Elektrodenvorschub entgegen dem Gefäßinnendruck erfolgen kann.

Weitere Merkmale, Eigenschaften und Vorteile der erfindungsgemäßen Verfahrensweisen und der zu deren Durchführung geeignet ausgebildeten metallurgischen Gefäße sind anhand von Ausführungsbeispielen in der Zeichnung schematisch dargestellt und im folgenden erläutert. Diese zeigt die Durchführung der erfindungsgemäßen Verfahrens weise in

Fig. 1    mit einphasigem Wechselstrom und einer Elektrode in einer Pfanne mit Gasspülung;

Fig. 2    mit einphasigem Wechselstrom und zwei Elektroden in einem Gefäß gemäß Fig. 1;

Fig. 3    mit Drehstrom in einem Gefäß gemäß Fig. 1;

Fig. 4    mit Gleichstrom und einer unverzehrbaren Elektrode in einem Gefäß gemäß Fig. 1;

Fig.5    mit Gleichstrom und einer verzehrbaren Elektrode in einem dafür ausgebildeten Gefäß;

Fig.6    in einem gasdicht verschließbaren Gefäß.

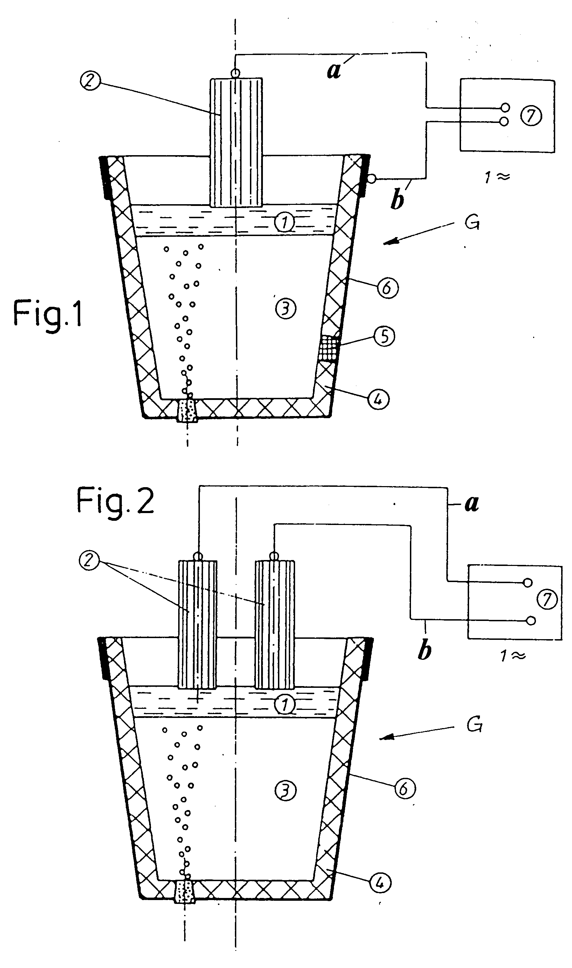

In einem Gefäß G ist eine von einer Schlackenschicht 1 abgedeckte Metallschmelze 3 vorgesehen, die in Fig. 1 mit der Gefäß- oder Pfannenwand 6 durch -- in der Gefäßauskleidung 4 angeordnete -- Kohlenstoffsteine 5 leitend verbunden ist.

Bei Verwendung von einphasigem Wechselstrom wird ein Pol durch eine in jene Schlackenschicht 1 eintauchende Elektrode 2 und der zweite Pol durch die Metallschmelze 3 gebildet, die über die Kohlenstoffsteine 5 und die Pfannenwand 6 an eine Rückleitung b einer Wechselstromquelle 7 angeschlossen ist. Diese ist durch eine Leitung a mit der Elektrode 2 verbunden.

Auch Fig. 2 zeigt eine einphasige Wechselstromquelle 7, deren beide Pole mit je einer in die Schlackenschicht 1 eintauchenden Elektrode 2 verbunden sind. Je nach Schlackenschichtiefe und Elektrodenabstand erfolgt die Stromleitung entweder direkt über die Schlacke zwischen den beiden Elektroden 2 oder von der einen Elektrode 2 über die Schlacke in das Stahlbad der Metallschmelze 3 und zurück zur Schlacke und zur zweiten Elektrode 2.

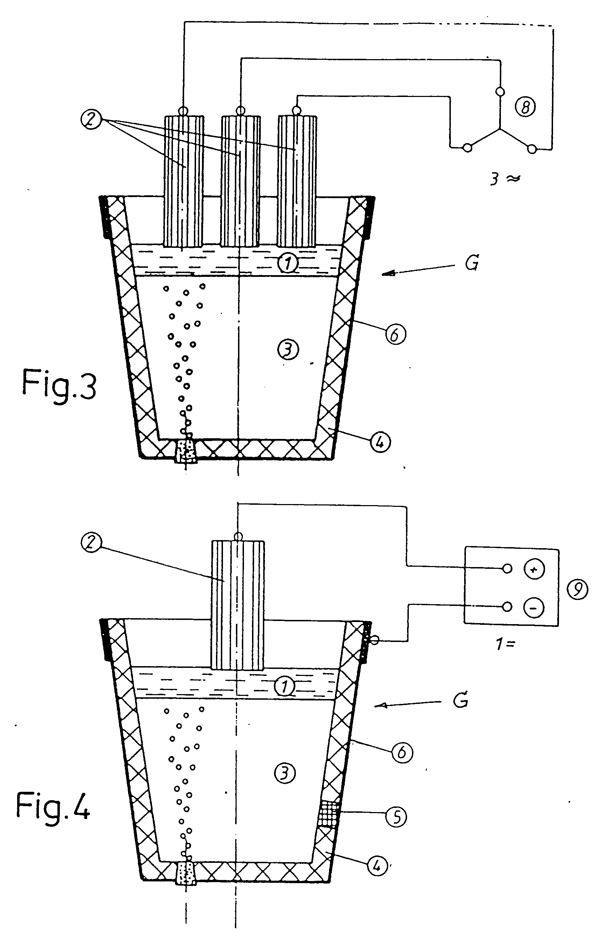

Fig. 3 zeigt ein Verfahren mit einem Drehstromtransformator 8, bei welchem jede Phase des Transformators 8 mit einer der drei in die Schlackenschicht 1 eintauchenden Elektroden 2 leitend verbunden ist.

Beim Verfahren der Fig. 4 dient als Stromversorgung eine Gleichstromquelle 9, und eine nichtverzehrbare Elektrode 2 bildet den positiven Pol (Anode), während die Metallschmelze 3 über Kohlenstoffsteine 5 und Gefäßwand 6 an den negativen Pol (Kathode) angeschlossen ist.

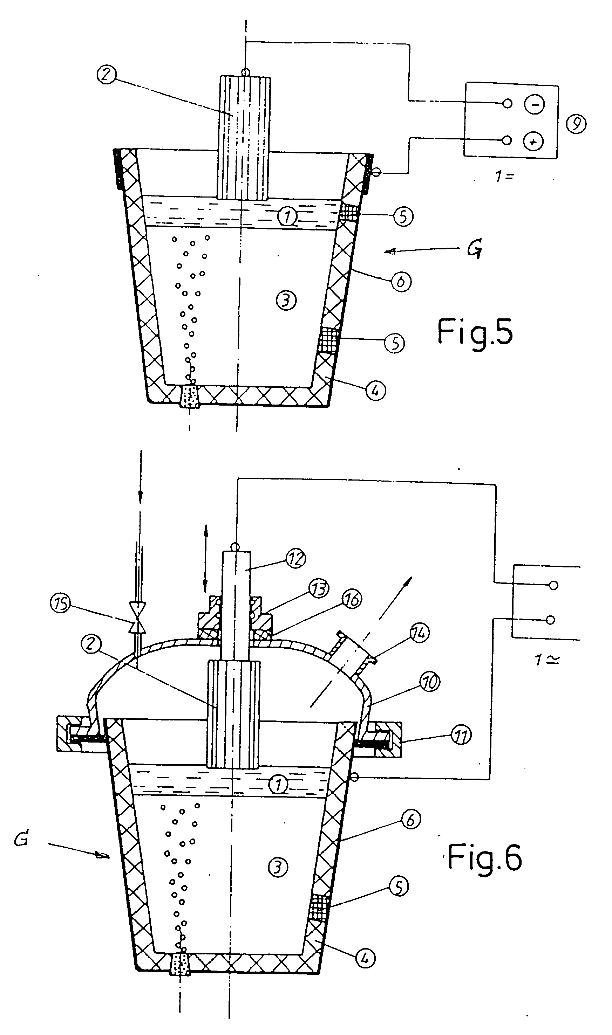

Mit der Gleichstromquelle 9 der Fig. 5 ist eine verzehrbare Elektrode 2 verbunden die den negativen Pol (Kathode) bildet, während die Metallschmelze 3 über Kohlenstoffsteine 5 und Gefäßwand 6 an den positiven Pol (Anode) angeschlossen ist.

Fig. 6 zeigt eine Pfanne G, die durch einen Deckel 10 mittels einer entsprechenden Vorrichtung 11 gasdicht verschlossen ist. Der Deckel 10 durchsetzt eine Elektrodenstange 12 der Elektrode 2 im Bereich einer gasdichte Durchführung 13, wobei der Deckel 10 über eine Leitung 14 an ein Vakuumsystem oder eine Druckgasversorgung 15 angeschlossen sowie zwischen Elektrodendurchführung 13 und Deckel 10 eine Platte 16 aus elektrisch isolierendem Material eingebaut ist. Falls erforderlich, kann der Deckel 10 ausgemauert oder wassergekühlt sein.

**Patentansprüche**

1.    Verfahren zum sekundärmetallurgischen Behandeln von Metallschmelzen, insbesondere Stahlschmelzen, in einem metallurgischen Gefäß (G) wie Gieß- oder Transportpfanne, Zwischengefäß, Verteiler oder Konverter, durch Einleiten von Gleich- oder ein- oder mehrphasigem Wechselstrom mittels eintauchender strombeaufschlagter Elektroden (2), wobei
eine die Schmelze (3) gegenüber der Atmosphäre vollständig abdeckende elektrisch leitende flüssige Schlackenschicht (1) von mindestens 50 mm Höhe mit einem spezifischen Widerstand zwischen 0,3 und 2,0 Ohm cm und einer Liquidustemperatur im Bereich zwischen 1250°C und 1500°C gebildet wird, in welche mindestens eine stromdurchflossene Elektrode (2) mit ihrer Stirnseite eintaucht, so daß der elektrische Strom von der Elektrodenspitze direkt in die Schlackenschicht (1) übergeht und diese durch Widerstandsheizung erwärmt wird, und wobei die Metallschmelze (3) und die Schlackenschicht (1) ohne Ausbildung eines Lichtbogens während der Beheizung kontinuierlich durch Gasspülen und/oder induktives Rühren bewegt werden.

2. Verfahren nach Anspruch 1, dadurch gekennzeichnet, daß die Schlacke zu mindestens 60 % aus CaO und $Al_2O_3$ in beliebigem Mischungsverhältnis besteht und als sonstige Zusätze gegebenenfalls jeweils bis 35 % $SiO_2$, MgO und/oder $CaF_2$ enthält, wobei ihr Gehalt an Schwermetalloxiden, wie Oxiden des Eisens, Mangans, Chroms und anderen 2 % nicht überschreitet.

3. Verfahren nach Anspruch 1, dadurch gekennzeichnet, daß bei einer Zusammensetzung der Schlackenschicht von

| | |
|---|---|
| CaO | 45 bis 65 % |
| $Al_2O_3$ | 10 bis 30 % |
| MgO | 10 bis 20 % |
| $CaF_2$ | 0 bis 15 % |
| $SiO_2$ | 10 bis 20 % |

deren spezifischer elektrischer Widerstand zwischen 0,4 und 0,8 Ohm.cm liegt.

4. Verfahren nach Anspruch 1, dadurch gekennzeichnet, daß die Eintauchtiefe der Elektrode (2) in die Schlackenschicht (1) wenigstens 10 mm beträgt.

5. Verfahren nach Anspruch 1, gekennzeichnet durch eine Höhe der Schlackenschicht (1) von 80 bis 150 mm.

6. Verfahren nach einem der Ansprüche 1 bis 5, dadurch gekennzeichnet, daß bei Einsatz verzehrbarer Elektroden (2) diese annähernd die gleiche chemische Zusammensetzung aufweisen wie die im Gefäß (G) enthaltene flüssige Metallschmelze.

7. Verfahren nach einem der Ansprüche 1 bis 5, dadurch gekennzeichnet, daß bei Einsatz verzehrbarer Elektroden (2) diese aus Legierungen oder Legierungsgemischen bestehen und solange abgeschmolzen werden, bis die im Gefäß enthaltene flüssige Metallschmelze einen ausreichenden Gehalt an den in der Elektrode enthaltenen Legierungen aufweist.

8. Verfahren nach Anspruch 6 oder 7, dadurch gekennzeichnet, daß eine oder mehrere verzehrbare Elektroden (2) in der flüssigen, elektrisch leitenden Schlackenschicht (1) gleichzeitig oder nacheinander abgeschmolzen werden und dadurch die Metallschmelze (3) erzeugt oder vergrößert wird.

9. Verfahren nach wenigstens einem der Ansprüche 1 bis 8, dadurch gekennzeichnet, daß einphasiger Wechselstrom oder Gleichstrom über eine einzige Elektrode (2) in die Schlackenschicht (1) eingeleitet und von dort über Leiterelemente (5) in der feuerfesten Auskleidung (4) des metallurgischen Gefäßes (G) und dessen Wandung (6) und an diese angeschlossene Leiter (8) zur Stromquelle (7) zurückgeleitet wird.

10. Verfahren nach Anspruch 9, dadurch gekennzeichnet, daß zum Abschmelzen einer an Gleichstrom angeschlossenen verzehrbaren Elektrode (2) diese die Kathode und die Metallschmelze (3) die Anode bildet.

11. Verfahren nach Anspruch 9, dadurch gekennzeichnet, daß zur Behandlung der Metallschmelze (3) die an Gleichstrom angeschlossene Elektrode (2) eine Graphitelektrode oder eine andere nichtverzehrbare Elektrode als Anode eingesetzt sowie die Metallschmelze (3) Kathode ist.

12. Verfahren nach Anspruch 9, dadurch gekennzeichnet, daß einphasiger Wechselstrom über eine Elektrode in die Schlackenschicht (1) eingeleitet und über eine zweite, zur ersten parallel angeordnete Elektrode wieder zurückgeleitet wird.

13. Verfahren nach Anspruch 9, dadurch gekennzeichnet, daß Drehstrom über drei auf einem Teilkreis angeordnete Elektroden in die Schlackenschicht (1) eingeleitet wird.

EP 0 275 349 B1

14. Verfahren nach wenigstens einem der Ansprüche 1 bis 13, dadurch gekennzeichnet, daß das Erzeugen und/oder Behandeln der Metallschmelze (3) durch verzehrbare oder unverzehrbare Elektroden (2) in einem gasdicht geschlossenen Gefäß bei einem Gasdruck kleiner als 500 mbar, vorzugsweise 50 mbar, und/oder bei einem Gasdruck größer als 2 bar im Innenraum erfolgt.

15. Verfahren nach wenigstens einem der Ansprüche 1 bis 14, dadurch gekennzeichnet, daß beim Überleiten der Metallschmelze (3) aus einem metallurgischen Gefäß, einer Gießpfanne od.dgl. Zwischengefäß in ein Verteiler- oder weiteres Zwischengefäß diese Metallschmelze (3) sowohl in der Gießpfanne als auch in den Verteiler- und Zwischengefäßen durch eine gemeinsame oder zwei getrennte Stromquellen beheizt wird.

## Claims

1. Process for the secondary-metallurgical treatment of metal melts, in particular steel melts, in a metallurgical vessel (G) such as a casting or transfer ladle, intermediate vessel, distributor or converter, by introduction of direct or single-phase or polyphase alternating current by means of immersed current-loaded electrodes (2), wherein an electrically conductive liquid slag layer (1) completely covering the melt (3) relative to the atmosphere and having a height of at least 50 mm with a resistivity of between 0.3 and 2.0 Ohm cm and a liquidus temperature in the range between 1250°C and 1500°C is formed, into which at least one current-carrying electrode (2) is immersed with its end face so that the electric current passes from the electrode tip directly into the slag layer (1) and the slag layer (1) is heated by resistance heating and wherein the metal melt (3) and the slag layer (1) are moved continuously by gas purging and/or inductive stirring during the heating operation without formation of an arc.

2. Process according to claim 1, characterised in that at least 60% of the slag consists of CaO and $Al_2O_3$ in any mixing ratio and, as other additives, the slag optionally contains up to 35% in each case of $SiO_2$, MgO and/or $CaF_2$, its content of heavy metal oxides such as iron, manganese, chromium and other oxides not exceeding 2%.

3. Process according to claim 1, characterised in that with a slag layer composed of

| | |
|---|---|
| CaO | 45 to 65% |
| $Al_2O_3$ | 10 to 30% |
| MgO | 10 to 20% |
| $CaF_2$ | 0 to 15% |
| $SiO_2$ | 10 to 20% |

the electrical resistivity thereof lies between 0.4 and 0.8 Ohm.cm.

4. Process according to claim 1, characterised in that the depth of immersion of the electrode (2) into the slag layer (1) is at least 10 mm.

5. Process according to claim 1, characterised by a height of the slag layer (1) of 80 to 150 mm.

6. Process according to one of claims 1 to 5, characterised in that when using consumable electrodes (2), these electrodes have substantially the same chemical composition as the liquid metal melt contained in the vessel (G).

7. Process according to one of claims 1 to 5, characterised in that when using consumable electrodes (2), these electrodes consist of alloys or alloy mixtures and are melted off until the liquid metal melt contained in the vessel has an adequate content of the alloys contained in the electrode.

8. Process according to claim 6 or 7, characterised in that one or more consumable electrodes (2) are melted simultaneously or in succession in the liquid electrically conductive slag layer (1) and the metal melt (3) is therefore produced or increased.

9

9. Process according to at least one of claims 1 to 8, characterised in that monophase alternating current or direct current is introduced via a single electrode (2) into the slag layer (1) and thence is returned via conductor elements (5) in the refractory lining (4) of the metallurgical vessel (G) and the wall (6) thereof and conductors (8) connected thereto to the power source (7).

10. Process according to claim 9, characterised in that in order to melt off a consumable electrode (2) connected to direct current, the electrode (2) forms the cathode and the metal melt (3) the anode.

11. Process according to claim 9, characterised in that in order to treat the metal melt (3), the electrode (2) connected to direct current, a graphite electrode or another non-consumable electrode is used as anode and the metal melt (3) is cathode.

12. Process according to claim 9, characterised in that single-phase alternating current is introduced via an electrode into the slag layer (1) and is returned again via a second electrode arranged parallel to the first one.

13. Process according to claim 9, characterised in that three-phase current is introduced into the slag layer (1) via three electrodes arranged on a graduated circle.

14. Process according to at least one of claims 1 to 13, characterised in that the production and/or treatment of the metal melt (3) by consumable or non-consumable electrodes (2) takes place in a vessel which is closed in a gas-tight manner at a gas pressure lower than 500 mbar, preferably 50 mbar, and/or at a gas pressure higher than 2 bar in the interior.

15. Process according to at least one of claims 1 to 14, characterised in that during the transfer of the metal melt (3) from a metallurgical vessel, a casting ladle or similar intermediate vessel into a distributor or further intermediate vessel, this metal melt (3) is heated both in the casting ladle and in the distributor and intermediate vessels by one common or two separate power sources.

## Revendications

1. Procédé pour le traitement, en métallurgie secondaire, de coulées métalliques, en particulier de coulées d'acier, dans un récipient métallurgique (G), tel par exemple qu'une poche de coulée ou de transport, un panier de coulée, un répartiteur ou un convertisseur, par amenée d'un courant continu ou d'un courant alternatif monophasé ou polyphasé à l'aide d'électrodes (2) immergées, alimentées en courant, dans lequel est formée une couche de laitier (1) liquide, conductrice de l'électricité, recouvrant complètement la coulée (3) en le protégeant de l'atmosphère, ayant une hauteur d'au moins 50 mm, une résistance spécifique comprise entre 0,3 et 2,0 ohm.cm, et présentant une température de liquidus comprise entre 1250 et 1500°C, couche dans laquelle est immergée par sa face frontale au moins une électrode (2) traversée par le courant, de façon que le courant électrique soit transmis directement de l'extrémité de l'électrode à la couche de laitier (1) et chauffe cette dernière par un chauffage par résistance, la coulée métallique (3) et la couche de laitier (1) étant remuées d'une manière continue sans formation d'un arc électrique pendant le chauffage, par balayage par un gaz et/ou brassage par induction.

2. Procédé selon la revendication 1, caractérisé en ce que le laitier est constitué pour au moins 60 % de CaO et de $Al_2O_3$ selon un rapport de mélange quelconque, et contient comme additifs supplémentaires éventuellement jusqu'à 35 % de chacun des additifs $SiO_2$, MgO et/ou $CaF_2$, sa teneur en oxydes de métaux lourds, tels que les oxydes de fer, de manganèse, de chrome, etc., ne dépassant pas 2 %.

3. Procédé selon la revendication 1, caractérisé en ce que, pour une couche de laitier ayant la composition suivante :

| CaO | 45 à 65 % |
|-----|-----------|
| $Al_2O_3$ | 10 à 30 % |
| MgO | 10 à 20 % |
| $CaF_2$ | 0 à 15 % |
| $SiO_2$ | 10 à 20 %, |

sa résistance électrique spécifique est comprise entre 0,4 et 0,8 ohm.cm.

4. Procédé selon la revendication 1, caractérisé en ce que la profondeur d'immersion de l'électrode (2) dans la couche de laitier (1) est d'au moins 10 mm.

5. Procédé selon la revendication 1, caractérisé en ce que la hauteur de la couche de laitier (1) est de 80 à 150 mm.

6. Procédé selon l'une des revendications 1 à 5, caractérisé en ce que, si l'on utilise des électrodes (2) consommables, ces dernières ont approximativement la même composition chimique que la coulée métallique liquide contenue dans le récipient (G).

7. Procédé selon l'une des revendications 1 à 5, caractérisé en ce que, si l'on utilise des électrodes (2) consommables, ces dernières sont constituées d'alliages ou de mélanges d'alliages et sont portées à fusion jusqu'à ce que la coulée métallique liquide contenue dans le récipient présente une teneur suffisante en les alliages contenus dans l'électrode.

8. Procédé selon la revendication 6 ou 7, caractérisé en ce qu'on procède à la fusion simultanée ou successive d'une ou plusieurs électrodes consommables (2) dans la couche de laitier liquide électroconductrice (1), ce qui provoque la formation ou l'accroissement de la coulée métallique (3).

9. Procédé selon au moins l'une des revendications 1 à 8, caractérisé en ce qu'un courant alternatif monophasé ou un courant continu est, par l'intermédiaire d'une électrode unique (2), amené à la couche de laitier (1) et, de là, par l'intermédiaire d'éléments conducteurs (5) se trouvant dans le revêtement réfractaire (4) du récipient métallurgique (G) et sa paroi (6), ainsi que de conducteurs (8) raccordés à cette dernière, est renvoyé à la source de courant (7).

10. Procédé selon la revendication 9, caractérisé en ce que, pour provoquer la fusion d'une électrode consommable (2) connectée à la source de courant continu, cette électrode forme la cathode, tandis que la coulée métallique (3) forme l'anode.

11. Procédé selon la revendication 9, caractérisé en ce que, pour traiter la coulée métallique (3), l'électrode (2) connectée à la source de courant continue est une électrode au graphite ou une autre électrode non consommable utilisée en anode, tandis que la coulée métallique (3) est montée en cathode.

12. Procédé selon la revendication 9, caractérisé en ce qu'un courant alternatif monophasé est, par l'intermédiaire d'une électrode, amené à la couche de laitier (1) et, par l'intermédiaire d'une deuxième électrode disposée parallèlement à la première, est de nouveau renvoyé à la source.

13. Procédé selon la revendication 9, caractérisé en ce qu'un courant triphasé est introduit dans la couche de laitier (1) par l'intermédiaire de trois électrodes disposées en arc de cercle.

14. Procédé selon au moins l'une des revendications 1 à 13, caractérisé en ce que la production et/ou le traitement de la coulée métallique (3) par des électrodes (2) consommables ou non consommables est effectuée dans un récipient fermé et étanche aux gaz, sous une pression de gaz inférieure à 500 mbar, de préférence 50 mbar, et/ou en présence d'une pression de gaz supérieure à 2 mbar dans le volume intérieur.

15. Procédé selon au moins l'une des revendications 1 à 14, caractérisé en ce que, lors du transvasement de la coulée métallique (3), à partir d'un récipient métallurgique, d'une poche de coulée ou d'un panier de coulée, dans un récipient répartiteur ou un autre panier de coulée, cette coulée métallique (3) est, tant dans la poche de coulée que dans les récipients répartiteurs et les paniers de coulée, chauffée par une source de courant commune ou deux sources de courant distinctes.

Fig.1

Fig.2

Fig.3

Fig.4

Fig.5

Fig.6